# EUROPÄISCHE PATENTSCHRIFT

(11) **EP 0 921 884 B1**
(45) Veröffentlichungstag und Bekanntmachung des Hinweises auf die Patenterteilung: **22.03.2000**
(21) Anmeldenummer: 97920586.1
(22) Anmeldetag: 04.04.1997
(51) Int. Cl.: B23D 61/02, B23D 61/12

(54) **SÄGEBLATT**
SAW BLADE
LAME DE SCIE

(43) Veröffentlichungstag der Anmeldung: 16.06.1999
(73) Patentinhaber: Handschuh & Scheider GmbH, 72622 Nürtingen (DE)
(72) Erfinder: HANDSCHUH, Herbert, D-72666 Neckarteilfingen (DE); SCHWEIZER, Albert, D-72631 Aichtal (DE); GEHRMANN, Hilmar, D-58256 Ennepetal (DE)
(74) Vertreter: Dörner, Lothar, Dipl.-Ing.
(86) Internationale Anmeldenummer: DE9700695
(87) Internationale Veröffentlichungsnummer: WO9845076

(56) Entgegenhaltungen:
- DE-A- 3 934 872
- DE-A- 4 300 622
- DE-A- 19 506 371
- DE-U- 9 206 000
- GB-A- 2 266 861
- US-A- 4 604 933

## Beschreibung

Die Erfindung betrifft ein Sägeblatt mit einem Grundkörper, auf dem ungeschränkte Zähne mit Schneiden angeordnet sind, die in sich wiederholenden Gruppen zu mindestens drei Zähnen zusammengefaßt und symmetrisch zur Längsmittelebene des Grundkörpers ausgebildet sind.

Beim Sägen fester, insbesonderer metallischer Werkstoffe treten an den Sägezähnen hohe Reibungs- und Stoßbelastungen auf. Aufgrund dieser hohen Belastungen sind die Sägezähne aus extrem hartem Material gefertigt. Um die Belastungen an den Sägezähnen zu verringern, ist es in der Kreissägen- und Bandsägenindustrie üblich, ungeschränkte Zähne in Verbindung mit verschiedenen Zahnspitzenformen als Vor- und Nachschneidergeometrie zu verwenden. Dieses Prinzip beinhaltet aufeinander folgende Zahngruppen von jeweils zwei Zähnen, von denen der jeweils erste Zahn - Vorschneider genannt - seitlich stark angephast und etwas länger als der folgende, nur minimal angephaste zweite Zahn - Nachschneider genannt - ist.

Ein Sägeblatt der eingangs genannten Art ist bekannt (vgl. DE 43 00 622 C2). Bei dem bekannten Sägeblatt sind mindestens zwei Gruppen von Zähnen ineinandergeschachtelt angeordnet. Die erste der beiden Gruppen besteht aus mindestens zwei Zähnen, die eine von Zahn zu Zahn abnehmende Höhe und dabei zunehmende Breite aufweisen. Die zweite Gruppe von Zähnen besteht aus mindestens zwei Zähnen, die identisch ausgebildet sind und die Zähne mit der größten Breite und geringsten Höhe darstellen. Das bekannte Sägeblatt weist den Nachteil auf, daß es aufgrund des ersten und gleichzeitig höchsten Zahns der ersten Gruppe von Zähnen relativ stoßempfindlich ist und zudem einem hohen Verschleiß unterliegt.

Hier will die Erfindung Abhilfe schaffen. Der Erfindung liegt die Aufgabe zugrunde, eine Sägeblatt zu schaffen, das eine geringere Stoßempfindlichkeit aufweist und einem geringeren Verschleiß unterliegt, gleichzeitig einen stabilen Gradlauf im Schnittkanal sowie eine gute Oberflächengüte erzeugt.

Gemäß der Erfindung wird diese Aufgabe dadurch gelöst, daß die Zähne einer Gruppe eine von Zahn zu Zahn zunehmende Höhe und abnehmende Breite aufweisen.

Mit der Erfindung ist ein Sägeblatt geschaffen, welches stoßunempfindlich und haltbar ist. Darüber hinaus sind die normalerweise beim Sägen auftretenden Schwingungsvibrationen reduziert. Die Lebensdauer ist bei gleichzeitiger Verbesserung des Schneidergebnisses erhöht.

Ausgestaltungen und Weiterbildungen der Erfindung sind in den Unteransprüchen beschrieben. Ein Ausführungsbeispiel der Erfindung ist in der Zeichnung dargestellt und wird nachfolgend im einzelnen erläutert. Es zeigen:
- Figur 1: eine Seitenansicht eines Ausschnittes eines Sägeblatts mit vier Zähnen in konstanter Teilung;
- Figur 2: die Draufsicht auf das in Figur 1 dargestellte Sägeblatt;
- Figur 3: die Ansicht von links des in Figur 1 dargestellten Sägeblattes;
- Figur 4: eine Seitenansicht eines Ausschnittes eines Sägeblatts mit zwei Gruppen von Zähnen unterschiedlicher Teilung;
- Figur 5: eine Figur 3 entsprechende Ansicht einer Gruppe von Zähnen mit unterschiedlichen Phasenwinkeln;
- Figur 6a: eine Seitenansicht eines Zahns mit Spanteiler;
- Figur 6b: die Draufsicht auf den in Figur 6a dargestellten Zahn;
- Figur 7a: eine Seitenansicht eines Zahns mit Dachzahn;
- Figur 7b: die Draufsicht auf den in Figur 7a dargestellten Zahn;
- Figur 8a: eine Seitenansicht eines Zahns mit Spanleitstufe;
- Figur 8b: die Draufsicht auf den in Figur 8a dargestellten Zahn.

Das als Ausführungsbeispiel gewählte Sägeblatt weist einen Grundkörper 1 auf. Auf dem Grundkörper 1 sind ungeschränkte Zähne 2 angeordnet. Die Zähne 2 sind zu Gruppen aus mindestens drei Zähnen zusammengefaßt.

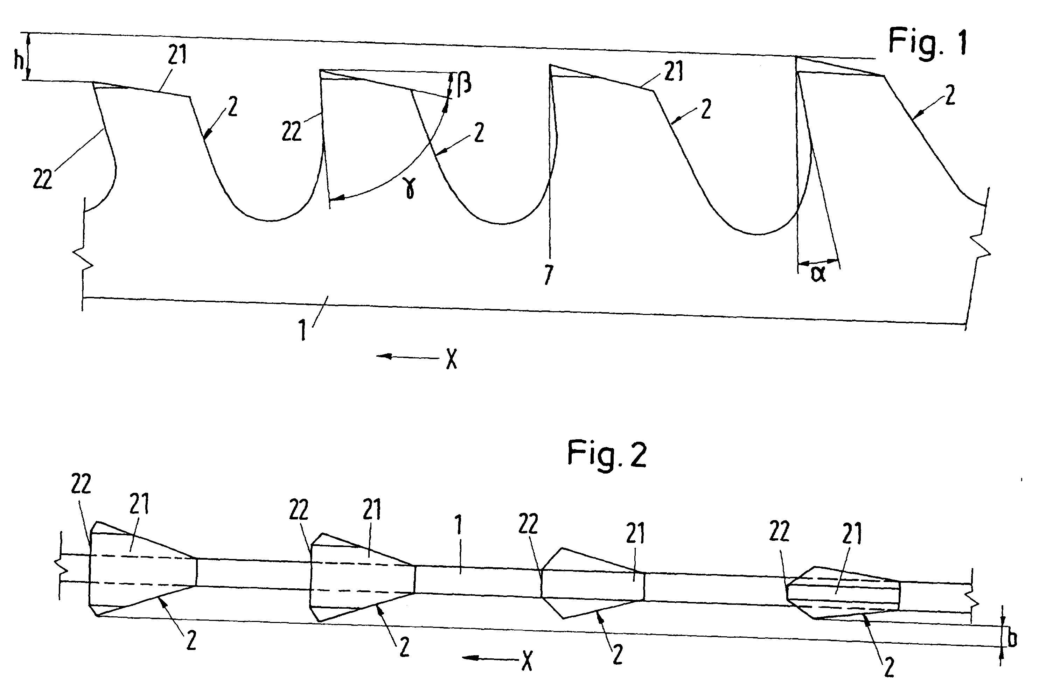

Jeder Zahn 2 weist an seinem dem Grundkörper 1 abgewandten Ende einen Zahnrücken 21 auf. Auf der der Schneidrichtung X (Figuren 1 und 2) zugewandten Seite weist jeder Zahn 2 eine Zahnbrust 22 auf. Die Zahnbrust 22 ist unter einem Spanwinkel α zur Vertikalen angeordnet. Der Spanwinkel kann innerhalb einer Zahngruppe variieren. Er ist in einem Bereich angesiedelt, der von der Vertikalen entgegen dem Uhrzeigersinn wandert. Der Zahnrücken 21 eines jeden Zahns 2 ist unter einem Freiwinkel β zur Horizontalen des Sägeblatts angeordnet. Der Freiwinkel β ist immer größer als 0°. Der Zahnrücken 21 und die Zahnbrust 22 eines jeden Zahns 2 sind unter einem Keilwinkel y zueinander angeordnet, der in jedem Fall kleiner als 90° ist.

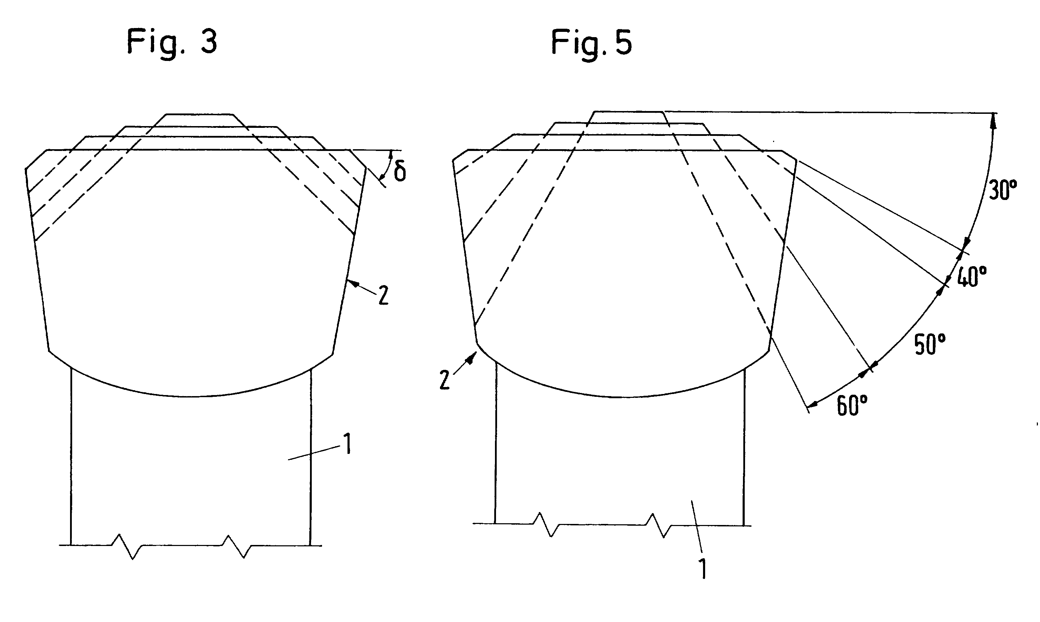

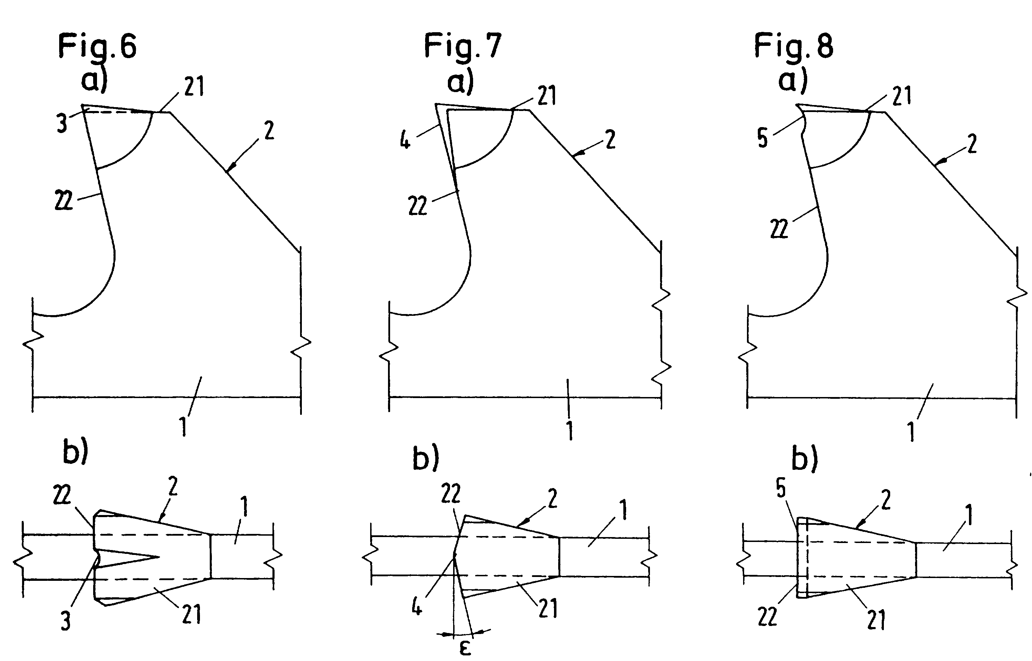

Die Zähne 2 weisen einen Phasenwinkel δ auf - Figur 3 -. Der Phasenwinkel δ kann in einem Bereich zwischen 5° und 60° gewählt werden. Auch kann der Phasenwinkel δ innerhalb einer Zahngruppe von Zahn zu Zahn variieren, wie dies im Ausführungsbeispiel nach Figur 5 dargestellt ist, in dem der Phasenwinkel δ zwischen 30° und 60° variiert.

Die zu einer Gruppe von Zähnen zusammengefaßten Zähne 2 weisen eine von Zahn zu Zahn zunehmende Höhe h auf. Gleichzeitig nimmt die Breite b der zu einer Gruppe von Zähnen zusammengefaßten Zähne 2 ab. Daraus ergibt sich, daß der niedrigste Zahn einer Gruppe gleichzeitig der breiteste, der höchste der schmalste Zahn ist. Die Zunahme der Höhe von Zahn zu Zahn beträgt mindestens 1/1000 mm, höchstens 5/100 mm. Die abnehmende Breite ist vorhanden, um einen folgenden Zahn im Schnittkanal vom vorschneidenden Zahn seitlich zu trennen.

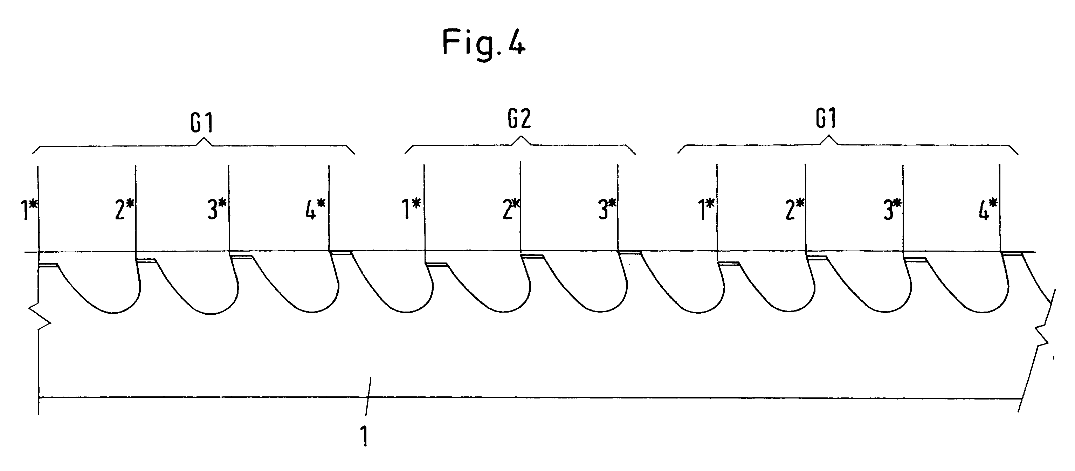

Die Zähne 2 sind zu Gruppen von Zähnen aus mindestens drei Zähnen zusammengefaßt. Die Gruppen von Zähnen wiederholen sich zyklisch auf dem Sägeband. Dabei ist es möglich, daß jeweils identische Gruppen von Zähnen aufeinander folgen. Es besteht darüber hinaus die Möglichkeit, daß die aufeinander folgenden Zahngruppen jeweils eine unterschiedliche Anzahl an Zähnen aufweisen - Figur 4 -. Hierbei folgt auf eine Gruppe G1 aus vier Zähnen eine Gruppe G2 aus drei Zähnen. Im Anschluß an die Gruppe G2 folgt erneut eine Gruppe G1. Die Gruppen von Zähnen G1 und G2 sind nicht miteinander verschachtelt. Alle Gruppen von Zähnen des Sägebandes weisen eine von Zahn zu Zahn zunehmende Höhe und eine von Zahn zu Zahn abnehmende Breite auf. Die Teilung des Sägeblattes, also der Abstand der Zähne untereinander, kann konstant oder variabel gewählt werden.

Bei dem in Figur 6 dargestellten Zahn ist auf dem Zahnrücken 21 des Zahns 2 ein Spanteiler 3 mit kleiner Phase eingeschliffen. Der Spanteiler 3 teilt den Span nochmals auf, bzw. schmälert ihn. Die Breite und Tiefe des Spanteilers 3 beträgt 0,01 mm bis 0,04 mm.

Bei dem Zahn 2 nach Figur 7 ist auf der Zahnbrust 22 ein Dachzahn 4 angebracht. Der Dachzahn 4 ist durch Anschleifen der Zahnbrust 22 unter einem Winkel ε gebildet. Der Winkel ε liegt bevorzugt in einem Bereich zwischen 1 und 15°. Durch den Dachzahn 4 an dem Zahn 2 ist die Stoßbelastung des Zahns auf das zu zerspanende Material weiter reduziert. Es trifft nur die Spitze des Dachzahns 4 auf das zu zerspanende Material, wodurch der Span über die Zahnspitze rollt.

Bei dem in Figur 8 dargestellten Zahn ist eine Spanleitstufe 5 vorgesehen. Die Spanleitstufe 5 ist durch einen Radius an dem dem Grundkörper 1 des Sägeblattes abgewandten Ende der Zahnbrust 22 gebildet. Bevorzugt liegt der Radius zwischen 0,1 und 1 mm. Die Spanleitstufe 5 kommt bei Werkstoffen wie z.B. Austeniten zum Einsatz. Diese Materialien neigen beim Zerspanen zum starken Erhitzen. Der heiße Span rollt in die Zahnlücke ab, schweißt sich beim Abkühlen fest und bleibt beim Austritt des Zahns aus dem Schnittkanal in den Zahnzwischenräumen "kleben". Beim Wiedereintritt in den Schnittkanal findet der nächste Span nicht genügend Raum. Der Spanraum füllt sich vollständig mit Spänen wodurch der Zahn aus der Schneidlinie ausbricht. Die Spanleitstufe 5 führt den heißen Span in einen kleineren Radius und somit von der Oberfläche des Spanraumes ab. Der Span hat während der Abkühlphase keinen Kontakt zum Sägeblatt und fällt beim Austreten aus dem Schnittkanal problemlos ab. Die beschriebenen unterschiedlichen Geometrien sind alle miteinander verknüpfbar. Die Verknüpfung dieser Geometrien bewirkt, daß jeder Zahn innerhalb einer Gruppe eine unterschiedliche Arbeit innerhalb des Schnittkanals ausführt. Durch die beim Sägen entstehenden differenten Kräfte auf die einzelnen Zähne, durch die Aufteilung eines Spans in mehrere feine Späne und durch die Zentrierung des Sägebandes infolge der erhabenen stärker angephasten Zahnspitzen werden beim Sägen normalerweise auftretende Schwingungsvibrationen vermindert bis ausgeschlossen.

## Patentansprüche

1. Sägeblatt mit einem Grundkörper (1), auf dem ungeschränkte Zähne (2) mit Schneiden angeordnet sind, die in sich wiederholenden Gruppen zu mindestens drei Zähnen zusammengefaßt und symmetrisch zur Längsmittelebene des Grundkörpers (1) ausgebildet sind, dadurch gekennzeichnet, daß die Zähne (2) einer Gruppe eine von Zahn zu Zahn zunehmende Höhe und abnehmende Breite aufweisen.

2. Sägeblatt nach Anspruch 1, dadurch gekennzeichnet, daß die Abstände zwischen den aufeinander folgenden Zähnen (2) variabel sind.

3. Sägeblatt nach Anspruch 1 oder 2, dadurch gekennzeichnet, daß die Zahngruppen jeweils eine unterschiedliche Anzahl an Zähnen (2) aufweisen.

4. Sägeblatt nach einem der Ansprüche 1 bis 3, dadurch gekennzeichnet, daß jeder der Zähne (2) einen Spanwinkel (α) aufweist, der in einem Bereich von der Vertikalen entgegen dem Uhrzeigersinn vorgesehen ist.

5. Sägeblatt nach Anspruch 4, dadurch gekennzeichnet, daß die Spanwinkel (α) innerhalb einer Zahngruppe variieren.

6. Sägeblatt nach einem der Ansprüche 1 bis 5, dadurch gekennzeichnet, daß die Zähne (2) Phasenwinkel (δ) aufweisen, die in einem Bereich zwischen 5° und 60° liegen.

7. Sägeblatt nach Anspruch 6, dadurch gekennzeichnet, daß die Phasenwinkel (δ) innerhalb einer Zahngruppe variieren.

8. Sägeblatt nach einem der Ansprüche 1 bis 7, dadurch gekennzeichnet, daß die Zähne (2) auf ihrem Rücken (21) einen Spanteiler (3) aufweisen.

9. Sägeblatt nach einem der Ansprüche 1 bis 8, dadurch gekennzeichnet, daß die Zähne (2) auf ihrer Brust (22) einen Dachzahn (4) aufweisen.

10. Sägeblatt nach einem der Ansprüche 1 bis 9, dadurch gekennzeichnet, daß an den Zähnen (2) eine Spanleitstufe (5) vorgesehen ist.

## Claims

1. Saw blade having a basic body (1), on which are disposed unset teeth (2) with cutting edges, which are combined into recurring groups of at least three teeth and are formed symmetrically to the longitudinal centre line of the basic body (1), characterized in that the teeth (2) of a group are of increasing height and decreasing width from tooth to tooth.

2. Saw blade according to claim 1, characterized in that the intervals between the successive teeth (2) are variable.

3. Saw blade according to claim 1 or 2, characterized in that the tooth groups each comprise a different number of teeth (2).

4. Saw blade according to one of claims 1 to 3, characterized in that each of the teeth (2) has a rake angle (α), which is provided in a range counterclockwise from the vertical.

5. Saw blade according to claim 4, characterized in that the rake angles (α) vary within a tooth group.

6. Saw blade according to one of claims 1 to 5, characterized in that the teeth (2) have phase angles (δ), which lie in a range of between 5° and 60°.

7. Saw blade according to claim 6, characterized in that the phase angles (δ) vary within a tooth group.

8. Saw blade according to one of claims 1 to 7, characterized in that the teeth (2) at their back (21) have a chip divider (3).

9. Saw blade according to one of claims 1 to 8, characterized in that the teeth (2) at their breast (22) have a top tooth (4).

10. Saw blade according to one of claims 1 to 9, characterized in that a chip-directing step (5) is provided on the teeth (2).

## Revendications

1. Lame de scie comportant un corps de base (1) sur lequel sont placées des dents non avoyées (2) à tranchants qui sont réunies en groupes répétitifs d'au moins trois dents et faites symétriquement par rapport au plan médian longitudinal du corps de base (1), caractérisée par le fait que les dents (2) d'un groupe présentent une hauteur qui croît d'une dent à l'autre et une largeur qui décroît d'une dent à l'autre.

2. Lame de scie selon la revendication 1, caractérisée par le fait que les distances entre les dents (2) successives sont variables.

3. Lame de scie selon l'une des revendications 1 et 2, caractérisée par le fait que les groupes de dents présentent un nombre différent de dents (2).

4. Lame de scie selon l'une des revendications 1 à 3, caractérisée par le fait que chacune des dents (2) présente un angle de dégagement (α) qui est prévu dans un domaine qui part de la verticale dans le sens inverse de celui des aiguilles d'une montre.

5. Lame de scie selon la revendication 4, caractérisée par le fait que les angles de dégagement (α) varient au sein d'un groupe de dents.

6. Lame de scie selon l'une des revendications 1 à 5, caractérisée par le fait que les dents (2) présentent des angles de chanfrein (δ) qui sont compris entre 5° et 60°.

7. Lame de scie selon la revendication 6, caractérisée par le fait que les angles de chanfrein (δ) varient au sein d'un groupe de dents.

8. Lame de scie selon l'une des revendications 1 à 7, caractérisée par le fait que les dents (2) présentent sur leur dos (21) un diviseur de copeau (3).

9. Lame de scie selon l'une des revendications 1 à 8, caractérisée par le fait que les dents (2) présentent sur leur face (22) une dent en toit (4).

10. Lame de scie selon l'une des revendications 1 à 9, caractérisée par le fait que sur les dents (2) est prévu un roule-copeau (5).
